# EUROPEAN PATENT SPECIFICATION

(11) **EP 3 370 069 B1**
(45) Date of publication and mention of the grant of the patent: **01.01.2020**
(21) Application number: 18167283.3
(22) Date of filing: 01.04.2008
(51) Int. Cl.: G01P 3/44, G01P 1/00, G01P 1/02, G01P 3/487, F16C 19/18, F16C 41/00, F16C 33/78, F16C 33/80

(54) **ROTATION DETECTING SENSOR MOUNTING CONSTRUCTION AND HUB UNIT**
ROTATIONSERKENNUNGSSENSORMONTAGEKONSTRUKTION UND NABENEINHEIT
CONSTRUCTION DE MONTAGE DE CAPTEUR DE DÉTECTION DE ROTATION ET UNITÉ DE MOYEU

(30) Priority: 02.04.2007 JP 2007096393; 06.06.2007 JP 2007150467; 06.06.2007 JP 2007150468; 06.06.2007 JP 2007150469; 08.06.2007 JP 2007152958; 30.08.2007 JP 2007224632
(43) Date of publication of application: 05.09.2018
(62) Divisional of application: 08739596.8
(73) Proprietor: JTEKT CORPORATION, Osaka 542-8502 (JP)
(72) Inventor: MASUDA, Yoshinori, Osaka-shi, Osaka, 542-8502 (JP); ISHIYAMA, Toshiya, Osaka-shi, Osaka, 542-8502 (JP)
(74) Representative: Hoefer & Partner Patentanwälte mbB

(56) References cited:
- US-A- 5 393 146
- US-A- 5 803 419
- US-A1- 2005 185 868
- US-A1- 2007 031 076
- US-A1- 2007 059 970
- US-B1- 6 176 622

## Description

### TECHNICAL FIELD

The present invention relates to a rotation detecting sensor mounting construction and a hub unit which includes such a rotation detecting unit.

### BACKGROUND ART

In general, a rotation detecting unit for detecting a rotational speed of a wheel is mounted on a hub unit of a motor vehicle. The rotation detecting unit is used as, for example, an information input means for an antilock brake system (ABS) of the motor vehicle. For example, the rotation detecting unit has a pulser ring which is fixed to an inner ring side of the hub unit and a sensor which is held on a supporting annular element (an annular cover element) which is fixed to an outer ring side of the hub unit, so that a change in rotation of the pulser ring which rotates as the wheel rotates is made to be detected by the sensor.

In rotation detecting sensor mounting constructions like this, there is one in which a head portion of the sensor is pushed into a holding portion (a sensor holder) which is formed on the supporting annular element in a radial direction, and a resilient piece (a clip portion) which is formed on the holding portion is brought into engagement of an engagement portion (a locking groove) of the head portion so as to press and fix the head portion. In some of those mounting construction, as this occurs, by a distal end face of the head portion of the sensor being brought into abutment with an inner surface of a resilient base portion of the resilient piece of the annular cover element, the head portion is positioned in the radial direction (refer to Patent Documents 1 to 4).

Patent Document 1: JP-A-2005-241351
Patent Document 2: JP-A-2005-315632
Patent Document 3: JP-A-2000-221203
Patent Document 4: JP-A-2000-221204

A technology described in Patent Document 1 is such that a head of a sensor is made to be attached to a sensor holder (a holding portion) in a clip-on fashion by an elastic force of a clip portion, and in order to prevent a radial dislocation of the sensor, a rotation suppressing means for suppressing a rotation of the sensor to a back side is formed so as to be brought into abutment with a lower end (a distal end) of a front surface of the sensor in such a state that the sensor is inserted into an accommodation pocket. A technology described in Patent Document 2 is such that the length of a claw portion is regulated which is brought into abutment with a lower end (a distal end) of a front surface of a sensor in such a state that the sensor is inserted into an accommodation pocket as with Patent Document 1, and a reinforcement rib is formed on the claw portion.

According to the technologies described above, although the head portion of the sensor can easily be positioned in the radial direction, an axial external force resulting from a collision of a foreign matter is exerted on the sensor as a rotating moment which rotates about the abutment position between the distal end face of the head portion and the inner surface of the resilient base portion of the resilient piece. Therefore, the head portion becomes easy to fall (to be inclined). Then, in these patent documents, by providing a bottom frame on the resilient base portion of the resilient piece (Patent Document 1) or by providing the claw portion on the resilient base portion of the resilient piece (Patent Document 2), the fall of the head portion is reduced, so as to prevent the radial dislocation thereof. However, when the head portion attempts to fall in such a state that the distal end face of the head portion is in abutment with the inner surface of the resilient base portion of the resilient piece, deflection or torsion is generated in the head portion of the sensor, leading to a fear that the rotation detecting accuracy of the sensor is reduced.

In addition, a technology described in Patent Document 3 is such that a flexible support piece which projects in an axial direction so as to deflect in a radial direction and a locking piece which projects in an axial direction are provided on a supporting annular element, whereby a sensor is held from radial directions by the flexible support piece and the locking piece so as to be positioned in place. A technology described in Patent Document 4 is such that a flexible support piece is provided on a supporting annular element for holding a sensor which is pushed in from a radial direction in an axial direction, and radial and circumferential positioning irregularities are provided so as to be distributed to the sensor and the flexible support piece.

According to these technologies, the sensor can be mounted on or dismounted from the supporting annular element simply and quickly by the simple operation. Although a construction has conventionally been demanded in which the sensor can be mounted on or dismounted from the supporting annular element in the simple fashion for repair or replacement, the frequency at which the sensor is subjected to such service maintenance in a year is relatively small, and there have not been many opportunities where the advantage of the construction is enjoyed.

Incidentally, since the sensor is mounted in such a state that the sensor is exposed to the outside, there is a fear that the sensor is dislocated from the supporting annular element by foreign matters which come to collide with the sensor while the vehicle is driving or under some climatic conditions so as not to secure the detection of rotation of the wheel, and hence, there is an increasing demand for stability and safety rather than assembling properties and operating properties of the sensor.

In addition, with the construction in which the sensor is pressed against for fixation by the clip portion which is elastically deformed, once a creep is generated in the clip portion due to a thermal change therein or the clip portion being pressed by the spring portion over time, the force with which the sensor is fixed is reduced, and even in the event that the claw portion (the rotation suppressing means) is formed which is brought into abutment with the lower end of the front surface of the sensor, the sensor can no more be fixed in a stable fashion, and to be worse, there is caused a fear that the stable output and detection of the sensor cannot be ensured.
Further US 6 176 622 B1 shows an attachment device for a data sensor for a bearing. It is further known from US 5 803 419 A to provide a support device for a measuring sensor to be mounted in a hole and which applies a retaining force to the sensor.

### PROBLEM THAT THE INVENTION IS TO SOLVE

A problem that is to be solved by the invention is how to provide a rotation detecting sensor mounting construction in which a sensor can be assembled simply and once the sensor is assembled, the sensor is made difficult to be dislocated so as to be held in a stable fashion and a hub unit which includes such a rotation detecting unit. More specifically, a problem that is to be solved by the invention is how to provide a rotation detecting sensor mounting construction in which a radial positioning of a head portion relative to a holding portion of an annular cover element and the prevention of a radial dislocation of the head portion from the holding portion are facilitated and the generation of deflection or torsion in the head portion is made difficult so as to enable a highly accurate detection of rotation, and a hub unit which includes such a rotation detecting unit.

### MEANS FOR SOLVING THE PROBLEM AND ADVANTAGE OF THE INVENTION

With a view to solving the problem the current invention provides a rotation detecting sensor mounting construction in which a wheel is supported rotatably by an inner ring of a hub unit which is fixed to a vehicle body via an outer ring, and a head portion of a sensor for detecting a change in rotation of a pulser ring which is fixed to a vehicle inner side end portion in an axial direction of the inner ring of the hub unit is pushed into a holding portion which is provided on an annular cover element which is fixed to the outer ring of the hub unit to confront the pulser ring from a radial direction so as to be fixed therein, wherein
the holding portion of the annular cover element has a guide piece for guiding the head portion of the sensor which is pushed thereinto along the push-in direction on a vehicle outer side in the axial direction and a resilient piece which is pressed from the vehicle inner side so as to be brought into engagement with an engagement portion which is formed on the head portion, whereby the holding portion holds the head portion to hold the head portion between the guide piece and the resilient piece in the axial direction.

The rotation detecting sensor mounting construction of the invention is characterized in that a reinforcement member is provided on the head portion, the reinforcement member being made of a metal material and taking a bare form on at least a surface of the engagement portion so as to receive the pressure from the resilient piece.

Normally, the pulser ring and the annular cover element of the rotation detecting sensor unit are formed of metal materials, while the head portion of the sensor which is fixed to the holding portion which is provided integrally on the annular cover element is formed of a polymeric material. As this occurs, in the event that a form (the resilient piece) is adopted in which the head portion is fixed by being pressed by the holding portion, a creep is generated in the portion of the head portion which is so pressed, whereby the holding force (the pressure) by the holding portion is mitigated, leading to a fear that looseness or fall of the head portion is caused. Then, according to the invention, the pressure exerted from the resilient piece is made to be received by the reinforcement member which is made of the metal material in the head portion. According to this configuration, since the metal material and the metal material are brought into abutment with each other so as to be brought into contact with each other for fixation, the generation of creep in the respective metal materials can be prevented or suppressed. In addition, since no creep is generated, the pressure (the holding force) by the holding portion is not reduced, thereby making it possible to fix the head portion in the stable fashion over a long period of time.

Consequently, for example, even in the event that a force is exerted on the head portion of the sensor in the direction in which the head portion is dislocated from the holding portion due to collision of foreign matters against the head portion while the vehicle is driving, that the spring force of the resilient piece is reduced due to deterioration with time after the installation of the head portion, or that a creep is generated in which strain in the head portion is increased with time under conditions where a constant load is exerted on the head portion by the resilient piece, the holding portion can hold the head portion in a stable fashion. Hence, the sensor can detect rotation of the pulser ring without any problem. In addition, since the conventional annular cover element (the holding portion) can be used as it is, no drastic change in design is required, and the production costs can be suppressed, whereby the inexpensive rotation detecting sensor mounting construction can be provided.

In addition, the reinforcement member can be formed as being made bare at both end portions of the surface of the engagement portion on the head portion which become parallel to the push-in direction. Namely, only by forming the reinforcement members at both the end portions in the push-in direction, the pressure from the resilient piece can be received without any problem, and therefore, a reduction in costs can be realized.

Additionally, the reinforcement member can be configured into a plate-like form which is made to extend from the engagement portion to the distal end portion of the head portion in the push-in direction. According to this configuration, the pressure from the resilient piece can be received in a stable fashion by the area of the reinforcement member being increased. Namely, the pressure exerted on a main body of the head portion from the resilient piece can be dispersed so as to suppress or prevent the generation of creep.

In addition, the head portion can be formed by molding integrally the metal material which makes up the reinforcement member and the polymeric material which makes up the head portion which excludes the reinforcement member. According to this configuration, a reduction in costs can be realized without any increase in the numbers of parts and assembling steps.

In addition, as a method for forming the reinforcement member on the head portion, the reinforcement member can be formed on the surface of the head portion as a separate member. As this occurs, the reinforcement member can be formed by fixing the reinforcement member in a predetermined position by screwing the member with screws or bonding it with an adhesive or by fixing the reinforcement member to wind the member around the engagement portion so as to cover it from the front surface to an opposite rear surface thereof. In the case of this approach being adopted, the invention can be applied to the existing head portions, and therefore, the reinforcement member can be realized in general.

### BRIEF DESCRIPTION OF THE DRAWINGS

[Fig. 1] A diagram showing an example of a sectional construction of a hub unit equipped with an examplary rotation detecting unit.
[Fig. 2] An exploded perspective view showing an example of a rotation detecting unit according to a first exemplary embodiment.
[Fig. 3] A perspective view, a plan view, a front view and a side view which show an example of a head portion of the first embodiment.
[Fig. 4] A perspective view, a plan view, a front view and a side view which show an example of a holding portion.
[Fig. 5] A perspective view showing an example of a state in which the head portion is mounted in the holding portion.
[Fig. 6] A side view of Fig. 5.
[Fig. 7] A perspective view, a plan view, a front view and a side view which show an example of a head portion of a second exemplary embodiment.
[Fig. 8] A perspective view, a plan view, a front view and a side view which show an example of a holding portion.
[Fig. 9] A perspective view showing an example of a state in which the head portion is mounted in the holding portion.
[Fig. 10] A side view of Fig. 9.
[Fig. 11] A perspective view and a side view which show a modified example 1 to the holding portion of the second embodiment.
[Fig. 12] A perspective view showing the modified example 1 of the holding portion in which the head portion is mounted.
[Fig. 13] A side view of Fig. 13.
[Fig. 14] A perspective view, a plan view and a side view which show a modified example 2 to the holding portion.
[Fig. 15] A perspective view showing the modified example 2 in which the head portion is mounted in the holding portion.
[Fig. 16] A perspective view and a side view which show an example of a head portion of a third embodiment of the invention.
[Fig. 17] A perspective view and a side view which show an example of a holding portion.
[Fig. 18] A perspective view showing an example of a state in which the head portion is mounted in the holding portion.
[Fig. 19] A side view of Fig. 18.
[Fig. 20] A perspective view showing a modified example to the head portion of the third embodiment.
[Fig. 21] A perspective view, a plan view, a front view and a side view which show an example of a head portion of a fourth exemplary embodiment.
[Fig. 22] A perspective view, a plan view and a side view which show an example of a holding portion.
[Fig. 23] A diagram showing a relationship between the holding portion and the head portion.
[Fig. 24] A perspective view showing an example of a state in which the head portion is mounted in the holding portion.
[Fig. 25] A plan view and a side view of Fig. 24.
[Fig. 26] A perspective view, a plan view, a front view and a side view which show an example of a head portion of a fifth exemplary embodiment.
[Fig. 27] A perspective view, a plan view, a front view and a side view which show an example of a holding portion.
[Fig. 28] A perspective view showing an example of a state in which the head portion is mounted in the holding portion.
[Fig. 29] Side views of Fig. 28.
[Fig. 30] A plan view showing another example of a holding portion.
[Fig. 31] A diagram showing modified examples to the head portion and the holding portion.

### BEST MODE FOR CARRYING OUT THE INVENTION

It is to be noted that the first, second, fourth and fifth of the subsequently described exemplary embodiments are not within the scope of the claims and only serve for further explanation and better understanding of the invention.

### (First Embodiment)

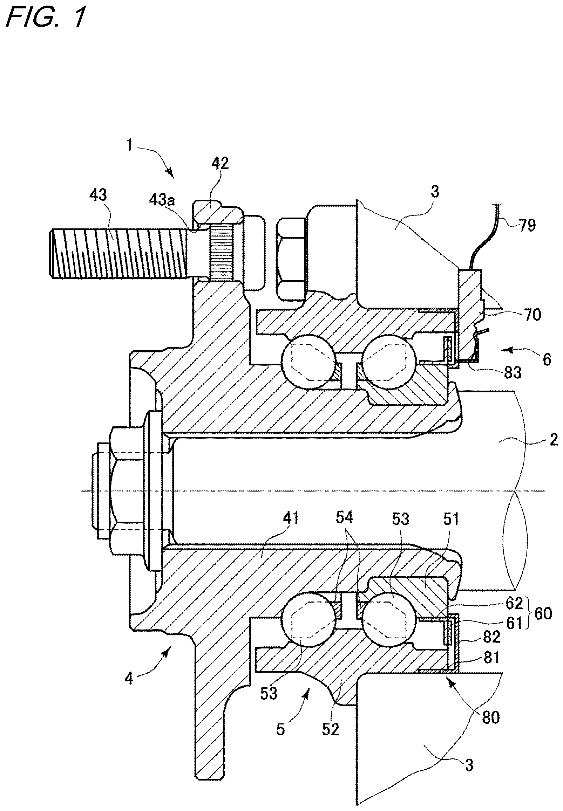

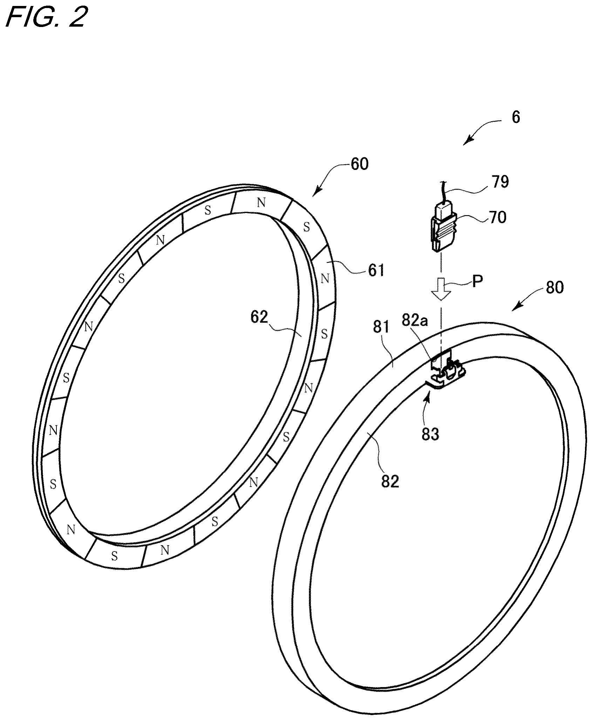

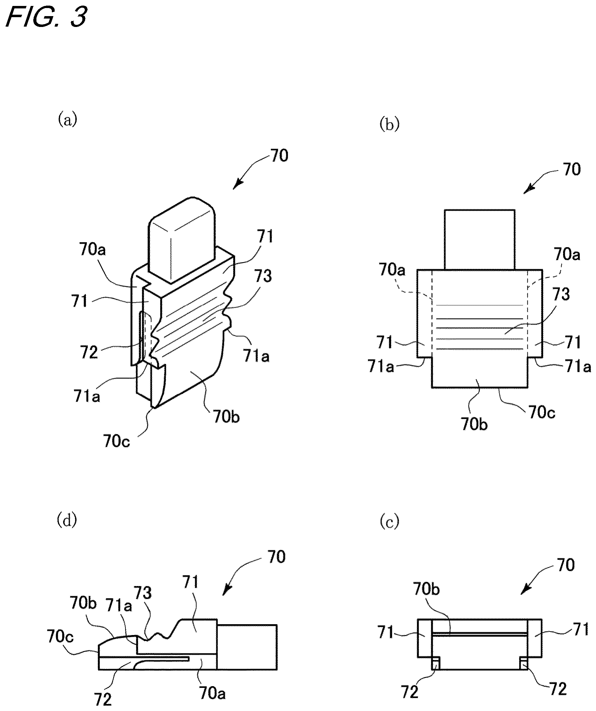

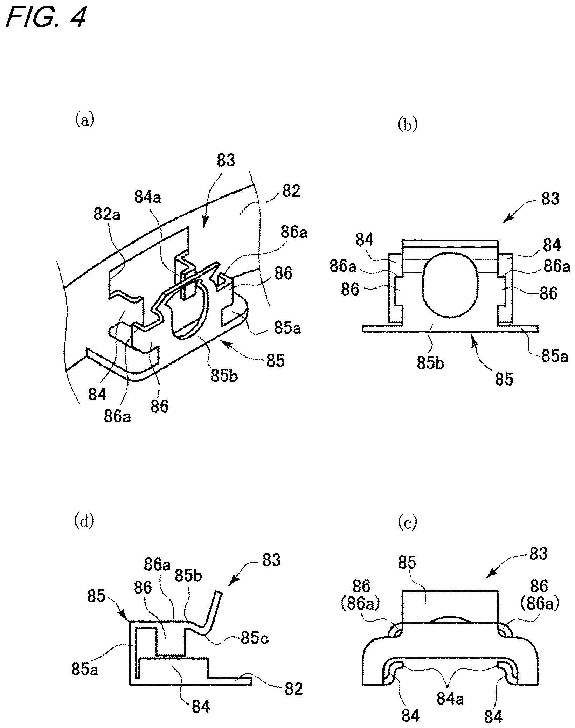

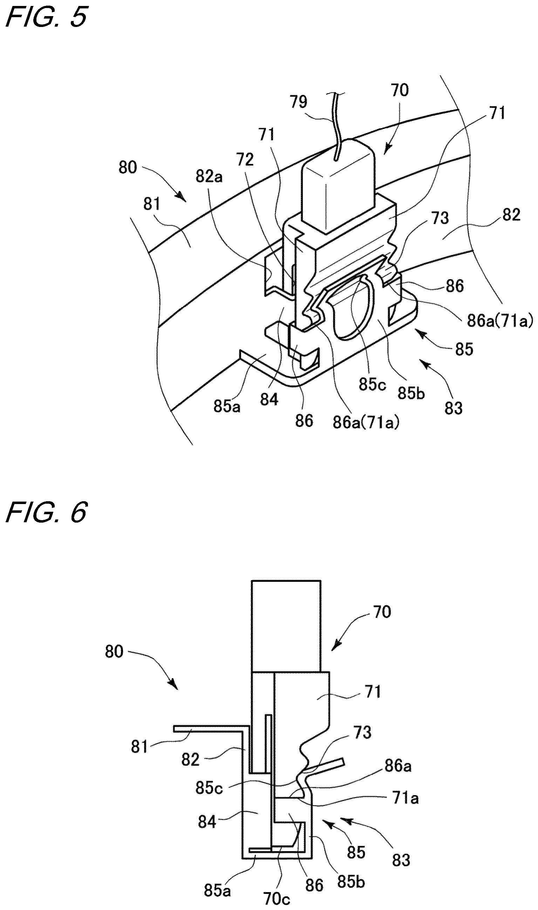

Hereinafter, a first exemplary embodiment will be described by reference to an embodiment shown in the drawings. Fig. 1 is a diagram showing an example of a sectional construction of a hub unit equipped with a rotation detecting unit, Fig. 2 is an exploded perspective view showing an example of a rotation detecting unit according to an exemplary embodiment, Fig. 3 shows a perspective view, a plan view, a front view and a side view which show an example of a head portion, Fig. 4 shows a perspective view, a plan view, a front view and a side view which show an example of a holding portion, Fig. 5 is a perspective view showing an example a state in which the head portion is mounted in the holding portion, and Fig. 6 is a side view of Fig. 5. It should be noted that in Fig. 1, a left-hand side in the figure denotes a vehicle outer side, and a right-hand side in the figure denotes a vehicle inner side.

As is shown in Fig. 1, a hub unit 1 is interposed between a drive axle 2 and an axle casing 3 and supports rotatably a wheel (the drive axle 2), not shown, relative to a vehicle body (the axle casing 3). The hub unit 1 includes a hub wheel 4 and a rolling bearing 5.

The hub wheel 4 has a shaft portion 41 which is spline fitted on the drive axle 2 and a hub flange 42 which fixes the wheel, not shown, at a vehicle outer side end portion of the shaft portion 41. Bolt insertion holes 43a through which bolts 43 are to be inserted are formed in the hub flange 42, and the wheel is fixed via the bolts 43.

The rolling bearing 5 is formed into a double-row, outwardly oriented angular ball bearing. Specifically, the rolling bearing 5 uses part of an outer circumferential surface of the shaft portion 41 of the hub wheel 4 as a vehicle outer side inner ring and includes a vehicle inner side single-row inner ring 51 which is press fitted on the outer circumferential surface of the shaft portion 41, an outer ring 52 which is press fitted in an inner circumference of the axle casing 3 and which has a plurality of (two) raceway grooves, a plurality of balls 53 (rolling elements) which are arranged into double rows, and two crown type pressed cages 54, 54. Consequently, in this embodiment, the rolling bearing 5 is formed so that the outer ring 52 is made unrotational while the inner ring 51 (the hub wheel 4) is made rotational.

Next, a rotation detecting unit 6 will be described which is mounted at a vehicle inner side end portion of the hub unit 1 that has been described above for detecting a change in rotation of the wheel, not shown, or the drive axle 2. As is shown in Fig. 2, the rotation detecting unit 6 includes an annular pulser ring 60 on which magnetic poles (N poles, S poles) having different polarities are formed alternately side by side in a circumferential direction, a head portion 70 of a sensor for detecting a change in rotation of the pulser ring 60 and an annular cover element 80 which holds the head portion 70.

The pulser ring 60 is formed to include a pulser ring main body 61 (a magnetized rotor) on which N poles and S poles are magnetized alternately and a pulser ring support portion 62 which has a cylindrical shape and fixes the pulser ring main body 61 to an end face which is caused to extend radially outwards in the form of a flange. Then, the pulser ring 60 is press fitted on an outer circumference of the inner ring 51 of the rolling bearing 5 and is fixed to a vehicle inner side end portion in an axial direction of the rolling bearing 5 (refer to Fig. 1).

The head portion 70 is formed of a polymeric material such as a resin and is molded with a sensor (not shown) such as an IC (Integrated Circuit) chip having a magnetic circuit embedded therein. In addition, the sensor can detect rotation of the pulser ring 60 by detecting the generation of voltage in the magnetic circuit due to a change in magnetic flux density occurring as a result of rotation of the pulser ring 60. In addition, a lead wire 79 is pulled out of the head portion 70.

The annular cover element 80 has a circumferential wall 81 having a cylindrical shape and an annular wall 82 which is caused to extend radially inwards from a vehicle inner side end portion of the circumferential wall 81. An opening 82a is formed in the annular wall 82 in a predetermined position to penetrate through the annular wall 82 in a thickness direction, and a holding portion 83 for holding the head portion 70 on a vehicle inner side of the annular cover element 80 is provided so as to correspond to the opening 82a. By this configuration, when the head portion 70 is held in the holding portion 83, rotation of the pulser ring 60 is detected via the opening 82a. Then, the annular cover element 80 is press fitted on an outer circumference of the outer ring 52 of the rolling bearing 5 and is fixed to a vehicle inner side end portion in the axial direction of the outer ring 52 so as to confront the pulser ring 60 (refer to Fig. 1). In addition, when the head portion 70 is mounted in the holding portion 83, the head portion 70 is made to be pushed into the holding portion from a radial direction (a direction indicated by an arrow P in Fig. 2) of the annular cover element 80 for fixation therein.

Next, by the use of Figs. 3 and 4, detailed forms of the head portion 70 and the holding portion 83 will be described. As is shown in Fig. 3, swelling portions 71, 71 are formed individually on both side portions 70a, 70a of the head portion 70 in a direction in which the head portion 70 is pushed in. In addition, the head portion 70 includes a groove-like guide rail portions 72, 72 which are provided individually in both the side portions 70a, 70a thereof so as to extend in a longitudinal direction (in the head portion push-in direction) and an engagement portion 73 taking the form of bellows-like irregularities which is provided on an upper portion 70b.

In addition, the swelling portions 71, 71 are formed in an intermediate area in the longitudinal direction of the head portion 70. Additionally, respective distal end faces 71a, 71a in the push-in direction of the swelling directions 71, 71 are received by receiving portions 86, 86 of a resilient piece 85, which will be described later (refer to Figs. 5, 6).

Following this, as is shown in Fig. 4, the holding portion 83 of the annular cover element 80 has a pair of guide pieces 84, 84 for guiding the head portion 70 of the sensor which is being pushed in along the aforesaid push-in direction on a vehicle outer side in the axial direction and the resilient piece 85 which is adapted to press the head portion 70 from the vehicle inner side so as to be brought into engagement with the engagement portion 73 formed on the head portion 70. By this configuration, the holding portion 83 can hold the head portion 70 by the resilient piece 85 from the axial direction. In addition, the receiving portions 86, 86 for receiving the distal end faces 71a, 71a of the swelling portions 71, 71 are formed individually on both sides in the push-in direction of the resilient piece 85 in positions which lie further forwards in the push-in direction than an engagement position between a pressing portion 85c and the engagement portion 73 of the head portion 70 to project therefrom (refer to Figs. 5, 6).

Specifically, the pair of guide pieces 84, 84 are formed such that the guide pieces 84, 84 rise so as to hold the opening 82a in the annular wall 82 therebetween from a circumferential direction and that confronting end faces 84a, 84a of the guide pieces 84, 84 extend long in a radial direction (refer to Fig. 4(a)).

In addition, the resilient piece 85 has a resilient base portion 85a which rises from an inner circumferential edge of the annular wall 82 and a resilient functioning portion 85b which is bent in the radial direction (radially outwards) from an upper end of the resilient base portion 85a. Additionally, the resilient functioning portion 85b is formed so as to include the pressing portion 85c which presses the engagement portion 73 of the head portion 70 for engagement therewith. Namely, the resilient piece 85 is formed to extend from a distal end round to an upper portion of the head portion 70 when the head portion 70 is mounted in the holding portion 83.

The receiving portions 86, 86 are formed to extend downwards so as to be suspended individually from both side portions of the resilient functioning portion 85b of the resilient piece 85. Flat surfaces 86a, 86a are formed individually on the receiving portion 86, 86 in a vertical direction to the surface of the pulser ring main body 61 of the pulser ring 60 (refer to Fig. 2), whereby the distal end faces 71a, 71a of the swelling portions 71 are received by the flat surfaces 86a, 86a, respectively (refer to Figs. 5, 6). In addition, the receiving portions 86, 86 are formed on the resilient functioning portion 85b in positions which lie closer to the resilient base portion 85a than the pressing portion 85c (refer to Fig. 4(d)).

More specifically, the receiving portions 86, 86 which have the flat surfaces 86a, 86a can be formed by bending both sides of the resilient functioning portion 85b of the resilient piece 85 towards the vehicle outer side along bending lines in the push-in direction. By bending both the sides of the resilient functioning portion 85b of the resilient piece 85 in that way, the receiving portions 86, 86 can be formed on the holding portion 83 of the annular cover element 80 easily and inexpensively.

Next, by the use of Figs. 5 and 6, a mounting construction of the head portion 70 into the holding portion 83 will be described. As has been described above, by the head portion 70 being pushed in radially towards the holding portion 83 (refer to Fig. 2), the head portion 70 is fixed in a predetermined position in the holding portion 83. Specifically, the head portion 70 is held in the holding portion 83 such that end portions of the guide pieces 84 fit in the guide rail portions 72 of the head portion 70. As this occurs, the end races 84a, 84a of the guide pieces 84 are brought into abutment or close contact with bottoms of the guide rail portions 72, 72, whereby a circumferential position of the head portion 70 is implemented. In addition, since the end portions of the guide pieces 84 fit in the groove-like guide rail portions 72 at the same time, an axial positioning of the head portion 70 is also implemented. By this configuration, when the head portion 70 is being pushed in towards the holding portion 83, the head portion 70 is guided in the push-in direction via the guide rail portions 72 and the guide pieces 84.

In addition, the pressing portion 85c of the resilient piece 85 of the holding portion 83 is brought into engagement with the engagement portion 73 of the head portion 70 to press the engagement portion 73. As this occurs, by the pressing portion 85c being brought into engagement with a predetermined recessed position on the engagement portion 73, a radial positioning of the head portion 70 relative to the holding portion 83 is implemented. Then, the distal end faces 71a, 71a of the swelling portions 71, 71 in the push-in direction which swell from both the side portions 70a of the head portion 70 are received, respectively, by the flat surfaces 86a, 86a which are formed on the receiving portions 86, 86 of the resilient piece 85. By the distal end faces 71a, 71a of the swelling portions 71, 71 being received by the flat surfaces 86a, 86a of the receiving portions 86, 86, the head portion 70 is positioned in the radial direction by the holding portion 83, whereby a pressing action (a resilient action) of the resilient piece can be applied forwards towards the head portion 70 from a position lying further rearwards than the receiving positions. By this configuration, the radial positioning of the head portion 70 and the prevention of radial dislocation of the head portion 70 can be facilitated.

As is shown in Fig. 6, a distal end face 70c of the head portion 70 is spaced apart from an inner surface of the resilient base portion 85a of the resilient piece 85 so that the distal end face 70c of the head portion 70 is not brought into contact with the inner surface of the resilient base portion 85a of the resilient piece 85 even in the event that the head portion 70 is inclined due to an axial external force being exerted on the head portion 70 as a result of collision of foreign matters thereagainst. By this configuration, since deflection or torsion is made difficult to be generated in the head portion 70, the sensor can detect rotation of the pulser ring 60 with high accuracy.

### (Second Embodiment)

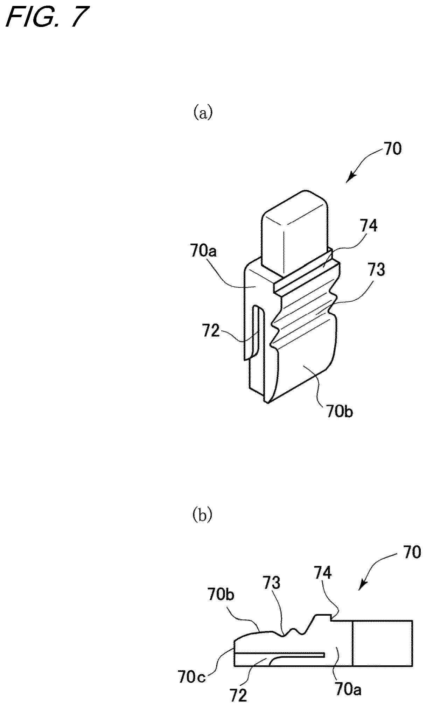

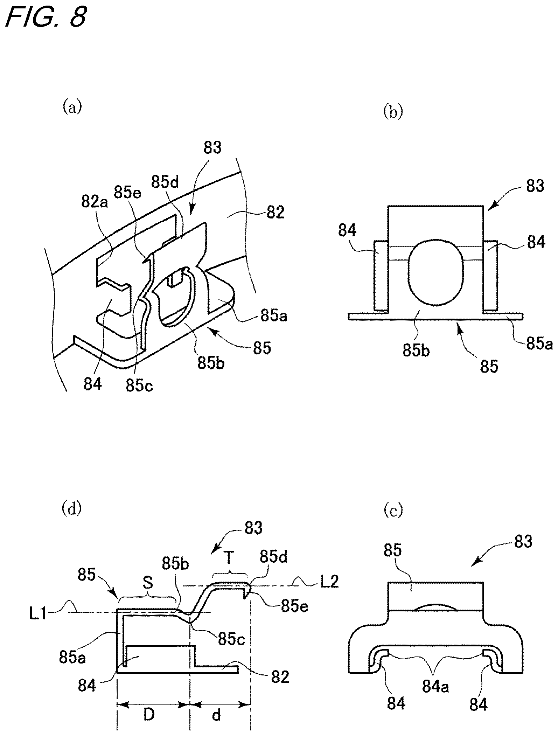

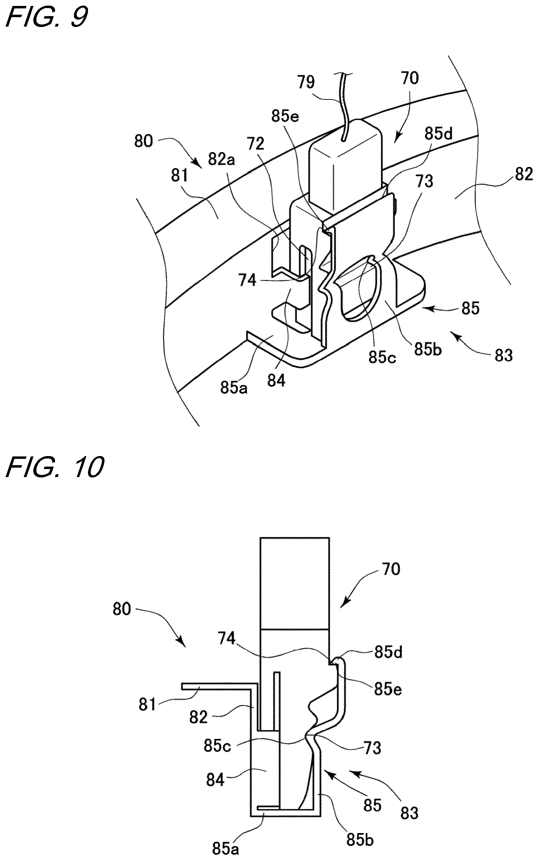

Hereinafter, referring to the drawings, an embodiment of a rotation detecting sensor mounting construction according to a second exemplary embodiment will be described. Fig. 7 shows a perspective view and a side view which show an example of a head portion, Fig. 8 shows a perspective view, a plan view, a front view, and a side view which show an example of a holding portion, Fig. 9 is a perspective view showing an example of a state in which the head portion is mounted in the holding portion, and Fig. 10 is a side view of Fig. 9.

It should be noted that in the following description, different portions will mainly be described which differ from the embodiment that has been described above, and like reference numerals will be given to like portions to those of the previous embodiment, so that the description thereof will be omitted or simplified.

Next, by the use of Figs. 7 and 8, detailed forms of a head portion 70 and a holding portion 83 in the second embodiment will be described. As with the previous embodiment, the head portion 70 and the holding portion 83 configure part of a rotation detecting unit 6 for detecting a change in rotation of a drive axle 2 of a hub unit 1. The head portion 70 is such as to detect rotation of a pulser ring 60 in the hub unit 1, and the holding portion 83 is provided on an annular cover element 80 so as to hold the head portion 70 on a vehicle inner side (refer to Figs. 1, 2). As is shown in Fig. 7, the head portion 70 includes groove-like guide rail portions 72, 72 which are provided individually in both side portions 70a, 70a thereof so as to extend in a longitudinal direction (in a head portion push-in direction), an engagement portion 73 taking the form of bellows-like irregularities which is provided on an upper portion 70b, and a stepped portion 74 provided similarly on the upper portion 70b which is adapted to be locked by a locking portion 85e of a resilient piece 85, which will be described later, of the holding portion 83. A positional relationship between the engagement portion 73 and the stepped portion 74 is such that the engagement portion 73 is formed in a position lying further forwards in the push-in direction than the stepped portion 74.

Following this, as is shown in Fig. 8, the holding portion 83 of the annular cover element 80 has a pair of guide pieces 84, 84 for guiding the head portion 70 of the sensor which is being pushed in along the aforesaid push-in direction on a vehicle outer side in the axial direction and the resilient piece 85 which is adapted to press the head portion 70 similarly from the vehicle inner side so as to be brought into engagement with the engagement portion 73 formed on the head portion 70. By this configuration, the holding portion 83 can hold the head portion 70 by the resilient piece 85 from the axial direction.

Specifically, the pair of guide pieces 84, 84 are formed such that the guide pieces 84, 84 rise so as to hold the opening 82a in the annular wall 82 therebetween from a circumferential direction and that confronting end faces 84a, 84a of the guide pieces 84, 84 extend long in a radial direction (refer to Fig. 8(a)).

In addition, the resilient piece 85 has a resilient base portion 85a which rises from an inner circumferential edge of the annular wall 82 and a resilient functioning portion 85b which is bent in the radial direction (radially outwards) from an upper end of the resilient base portion 85a. Additionally, the resilient functioning portion 85b is formed so as to include a pressing portion 85c which presses the engagement portion 73 of the head portion 70 from the vehicle inner side for engagement therewith and the locking portion 85e which is provided at an end portion 85d (a distal end) which constitutes a portion caused to extend from the pressing portion 85c for catching to lock the stepped portion 74 of the head portion 70.

In addition, the resilient functioning portion 85b (the resilient piece 85) is formed to extend along the push-in direction of the head portion 70, and an intermediate portion along the length thereof is caused to swell towards a vehicle outer side so as to form the pressing portion 85c, whereby the resilient functioning portion 85b is formed into a proximal end side portion S and a distal end side portion T which are defined on both sides of the pressing portion 85c as a boundary, the proximal end side portion S and the distal end side portion T being formed in parallel to each other (in parallel to each other along a straight line L1 and a straight line L2) (refer to Fig. 8(d)). Namely, the resilient functioning portion 85b is formed such that the resilient functioning portion 85b once extends to the vehicle outer side so as to form the pressing portion 85c, changes the direction at the pressing portion 85c so formed and extends to the vehicle inner side. Consequently, the resilient piece 85c is formed to extend from a distal end round to an upper portion of the head portion 70 when the head portion 70 is mounted in the holding portion 83.

In addition, assuming that a length of the proximal end side to the pressing portion 85c is referred to as D and a length from the pressing portion 85c to the end portion 85d (the distal end) is referred to as d, the resilient piece 85 (the resilient functioning portion 85b) is formed such that the length d becomes shorter than the length D (refer to Fig. 8(d)).

Additionally, the locking portion 85e is formed by the end portion 85d (the distal end) of the resilient piece 85 (the resilient functioning portion 85b) being bent back towards the vehicle outer side. Then, the bent-back portion is caught on the stepped portion 74 of the head portion 70.

Next, by the use of Figs. 9 and 10, a mounting construction of the head portion 70 into the holding portion 83 will be described. As has been described above, by the head portion 70 being pushed in radially (refer to the first embodiment shown in Fig. 2) towards the holding portion 83, the head portion 70 is fixed in a predetermined position in the holding portion 83. Specifically, the head portion 70 is held in the holding portion 83 such that end portions of the guide pieces 84 of the holding portion 83 fit in the guide rail portions 72 of the head portion 70. As this occurs, the end faces 84a, 84a of the guide pieces 84 are brought into abutment or close contact with bottoms of the guide rail portions 72, 72, whereby a circumferential positioning of the head portion 70 is implemented. In addition, since the end portions of the guide pieces 84 fit in the groove-like guide rail portions 72 at the same time, an axial positioning of the head portion 70 is also implemented. By this configuration, when the head portion 70 is pushed in towards the holding portion 83, the head portion 70 is guided in the push-in direction via the guide rail portions 72 and the guide pieces 84.

In addition, the pressing portion 85c of the resilient piece 85 of the holding portion 83 is brought into engagement with the engagement portion 73 of the head portion 70 to press the head portion 70. As this occurs, by the pressing portion 85c being brought into engagement with the engagement portion 73 in a predetermined recessed position, a radial positioning of the head portion 70 relative to the holding portion 83 is implemented. Additionally, the locking portion 85e formed at the end portion 85d (the distal end) of the resilient functioning portion 85b is caught on the stepped portion 74 of the head portion 70. Consequently, the head portion 70 is fixed in the holding portion 83 in such a state that the head portion 70 is pressed from the vehicle inner side by the resilient piece 85 and the stepped portion 74 is caught by the locking portion 85e of the resilient piece 85.

In addition, as has been described above, the proximal end side portion S and the distal end side portion T (refer to Fig. 8(d)) of the resilient functioning portion 85b are formed to extend in the radial direction of the annular cover element 80 in parallel to each other, and the guide rail portions 72 and the guide pieces 84 are also formed parallel to each other. In this configuration, since the respective constituent members are formed to extend in the radial direction, the axial expansion of the rotation detecting sensor mounting construction is suppressed, so that the same construction can be formed compact in the axial direction.

According to the construction described above, even in the event that the fixing force for holding the sensor is reduced due to a reduction in spring force as a result of deterioration with age of the resilient piece after installation of the annular cover element on the vehicle and the generation of creep as a result of yielding of the resin, according to the construction described above, the head portion can be fixed in the holding portion in a stable state. Hence, the reliable rotation detecting unit 6 can be mounted on the hub unit 1.

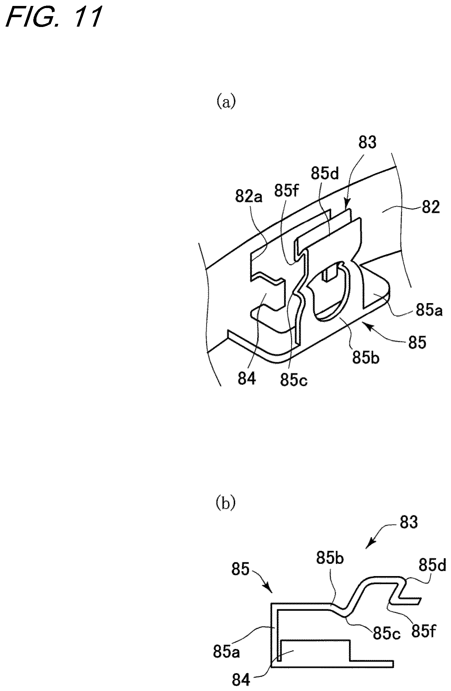

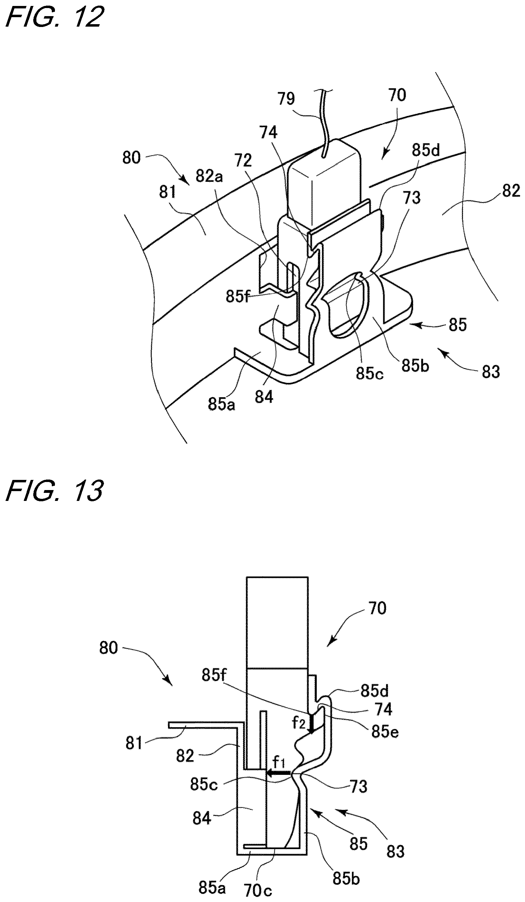

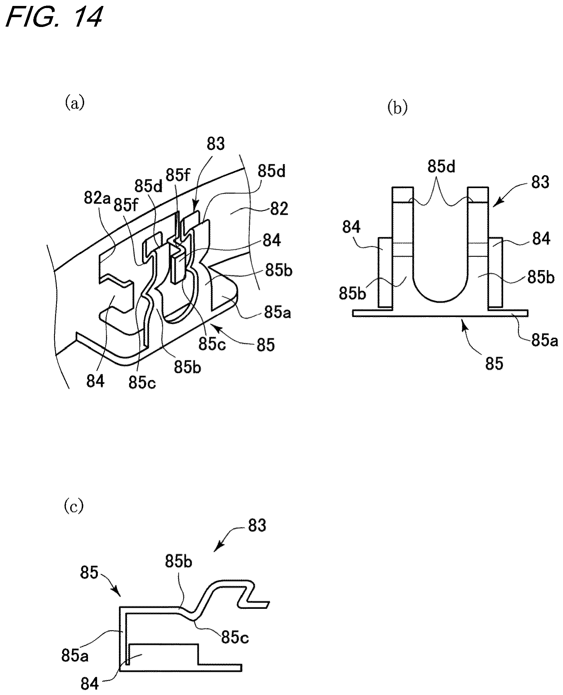

Next, referring to the drawings, a modified example to the rotation detecting sensor mounting construction according to the second embodiment will be described. Fig. 11 shows a perspective view and a side view which show a modified example 1 of a holding portion, Fig. 12 is a perspective view showing the modified example 1 of the holding portion in which the head portion is mounted, and Fig. 13 is a side view of Fig. 14.

As is shown in Fig. 11, in a first mode of the modified example, a resilient functioning portion 85c of a resilient piece 85 of a holding portion 83 is formed so as to include a pressing portion 85c which presses the engagement portion 73 of the head portion 70 from the vehicle inner side for engagement therewith and a pressing and locking portion 85f (a locking portion) provided at an end portion 85d which constitutes a portion caused to extend from the pressing portion 85c for pressing the stepped portion 74 of the head portion 70 along the push-in direction. By this configuration, when the holding portion 70 is fixed in the holding portion 83, the head portion 70 can be held from the radial direction by the pressing and locking portion 85f. In addition, the pressing and locking portion 85f is formed by the end portion 85d of the resilient piece 85 (the resilient functioning portion 85b) being caused to swell towards the vehicle outer side and in the push-in direction and to have a direction changing portion. In addition, this direction changing portion is made to press the stepped portion 74 of the head portion 70 relatively.

Next, as is shown in Figs. 12 and 13, as with the aforesaid embodiments, by the head portion 70 being pushed in radially (refer to Fig. 2) towards the holding portion 83, the head portion 70 is fixed in a predetermined position in the holding portion 83. Namely, the pressing portion 85c of the resilient piece 85 of the holding portion 83 is pressed (an arrow f1) against the engagement portion 73 of the head portion 70 for engagement therewith, and the pressing and locking portion 85f of the resilient functioning portion 85b is pressed (an arrow f2) against the stepped portion 74 of the head portion 70 for engagement therewith. As this occurs, the distal end 70c of the head portion 70 is brought into abutment with an inner wall surface of a resilient base portion 85a so as to be restricted from being pushed in further in the radial direction, whereby a state is produced in which the head portion 70 is held in the radial direction by the pressing and locking portion 85f which is pressed thereagainst from a tail side. Note that the restriction on the radial pushing in of the head portion 70 may be implemented by the side portions 70a of the head portion 70 being brought into abutment with radially outward side surfaces of guide pieces 84.

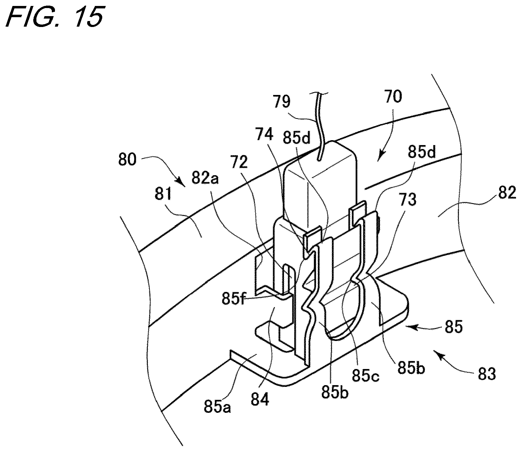

Fig. 14 shows a perspective view, a plan view and a side view which show a second modified example of a holding portion, and Fig. 15 is a perspective view showing the second modified example of the holding portion in which the head portion is mounted. As is shown in Fig. 14, in the second modified example, there are provided two resilient functioning portion 85b on a resilient piece 85 of a holding portion 83 to be spaced a predetermined distance circumferentially apart from each other so as to correspond to the width of the head portion 70. By this configuration, as is shown in Fig. 15, since the respective resilient functioning portions 85b hold individually the head portion 70, a fine adjustment matching the shape of the head portion 70 becomes possible.

### (Third Embodiment)

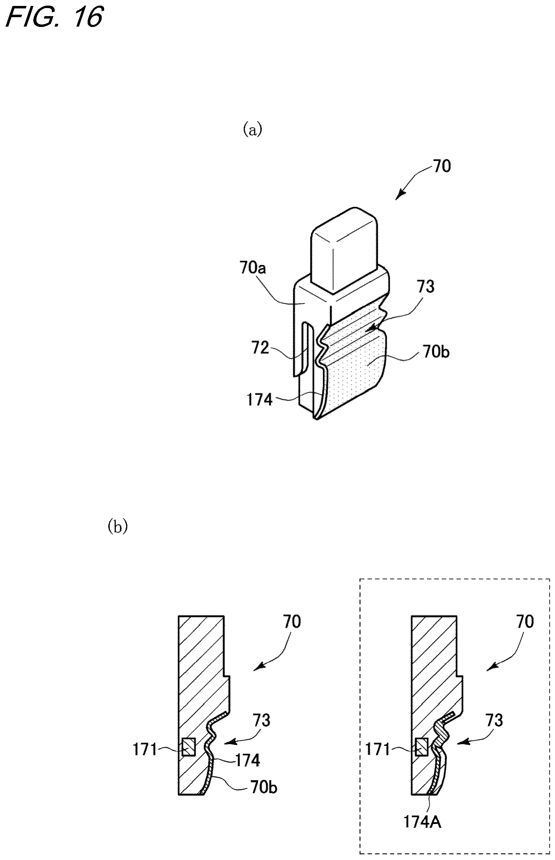

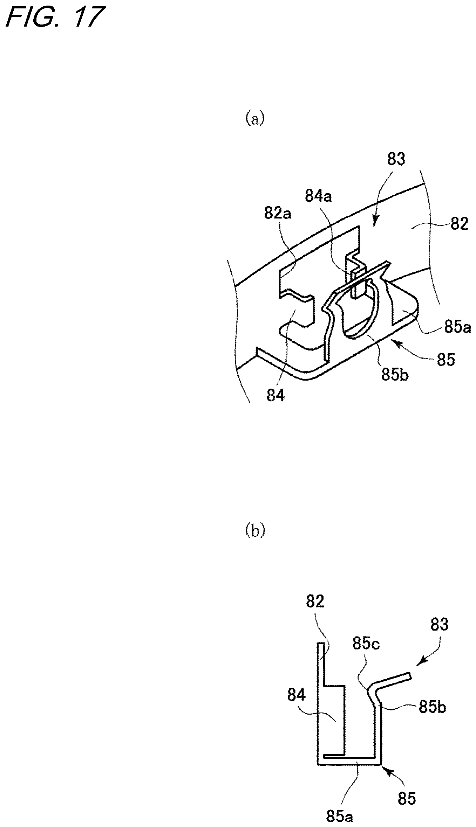

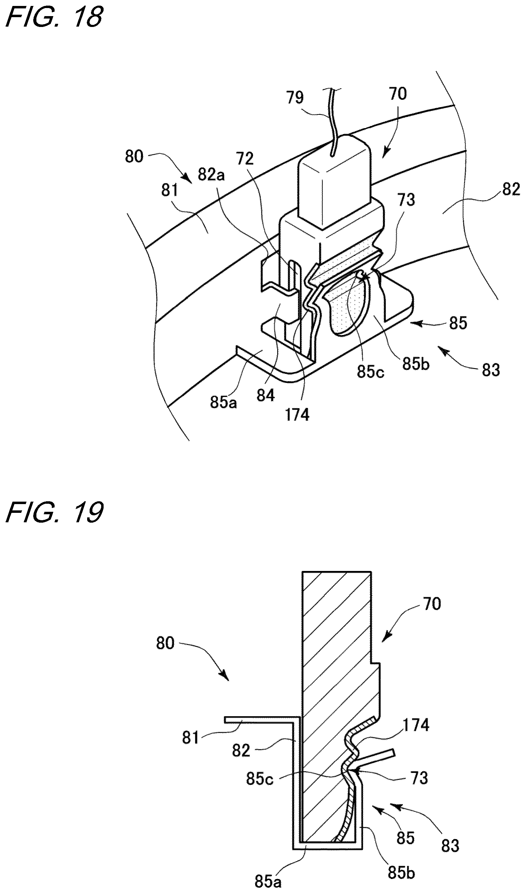

Hereinafter, referring to the drawings, an embodiment of a rotation detecting sensor mounting construction according to a third inventive embodiment will be described. Fig. 16 shows a perspective view and a side view which show an example of a head portion, Fig. 17 shows a perspective view and a side view which show an example of a holding portion, Fig. 18 is a perspective view showing an example of a state in which the head portion is mounted in the holding portion, and Fig. 19 is a side view of Fig. 18.

As with the previous embodiments, a head portion 70 and a holding portion 83 configure part of a rotation detecting unit 6 for detecting a change in rotation of a drive axle 2 of a hub unit 1. The head portion 70 is such as to detect rotation of a pulser ring 60 in the hub unit 1, and the holding portion 83 is provided on an annular cover element 80 so as to hold the head portion 70 on a vehicle inner side (refer to Figs. 1, 2).

The head portion 70 is formed of a polymeric material such as a resin and is molded with a sensor 171 (refer to Fig. 16(b)) such as an IC (Integrated Circuit) chip having a magnetic circuit embedded therein. In addition, the sensor 171 can detect rotation of the pulser ring 60 by detecting the generation of voltage in the magnetic circuit due to a change in magnetic flux density occurring as a result of rotation of the pulser ring 60. In addition, a lead wire 79 is pulled out of the head portion 70.

Specifically, as is shown in Fig. 16(a), the head portion 70 includes groove-like guide rail portions 72, 72 which are provided individually in both side portions 70a, 70a thereof so as to extend in a longitudinal direction (in a head portion push-in direction; refer to Fig. 2) and an engagement portion 73 taking the form of bellows-like irregularities which is provided on an upper portion 70b. In addition, a reinforcement member 174 is provided on the head portion 70, which reinforcement member 174 is made of a metal material such as a cold-rolled steel sheet, which is the same material as the annular cover element, SK steels and the like and is made bare at least on the surface of the engagement portion 73. This reinforcement member 174 functions to receive a pressure from a resilient piece 85 of the holding portion 83, which will be described later.

As is shown in Fig. 16(b), the reinforcement member 174 takes the form of a plate and is formed to extend from the engagement portion 73 to a distal end portion in a direction in which the head portion 70 is pushed into the holding portion 83 or a push-in direction on the head portion 70. In addition, the head portion 70 is formed by integrally molding the sensor 171, the metal material which makes up the reinforcement member 174 and the polymeric material which makes up the head portion 70 excluding the reinforcement member 174. As this occurs, the sensor 171 can temporarily be fastened to the reinforcement member 174, and hence, the head portion 70 can easily be molded integrally. In addition, as is shown in a diagram which is surrounded by a broken like in Fig. 16(b), the reinforcement member 174 may only have to be made bare at least on the surface of the engagement portion 73 and hence, may be embedded or inexistent in other areas on the upper portion 70b than the engagement portion 73.

Following this, as is shown in Fig. 17, the holding portion 83 of the annular cover element 80 has a pair of guide pieces 84, 84 for guiding the head portion 70 of the sensor which is being pushed in along the aforesaid push-in direction on a vehicle outer side in the axial direction and the resilient piece 85 which is adapted to press the head portion 70 similarly from the vehicle inner side so as to be brought into engagement with the engagement portion 73 formed on the head portion 70. By this configuration, the holding portion 83 can hold the head portion 70 by the resilient piece 85 from the axial direction.

Specifically, the pair of guide pieces 84, 84 are formed such that the guide pieces 84, 84 rise so as to hold the opening 82a in the annular wall 82 therebetween from a circumferential direction and that confronting end faces 84a, 84a of the guide pieces 84, 84 extend long in a radial direction (refer to Fig. 17(a)).

In addition, the resilient piece 85 has a resilient base portion 85a which rises from an inner circumferential edge of the annular wall 82 and a resilient functioning portion 85b which is bent in the radial direction (radially outwards) from an upper end of the resilient base portion 85a. Additionally, the resilient functioning portion 85b is formed so as to include a pressing portion 85c which presses the engagement portion 73 of the head portion 70 for engagement therewith. Namely, the resilient piece 85 is formed so as to extend from a distal end round to an upper portion of the head portion 70 when the head portion 70 is mounted in the holding portion 83.

Next, by the use of Figs. 18 and 19, a mounting construction of the head portion 70 into the holding portion 83 will be described. As has been described above, by the head portion 70 being pushed in radially (refer to Fig. 2) towards the holding portion 83, the head portion 70 is fixed in a predetermined position in the holding portion 83. Specifically, the head portion 70 is held in the holding portion 83 such that end portions of the guide pieces 84 of the holding portion 83 fit in the guide rail portions 72 of the head portion 70. As this occurs, the end faces 84a, 84a of the guide pieces 84 are brought into abutment or close contact with bottoms of the guide rail portions 72, 72, whereby a circumferential positioning of the head portion 70 is implemented. In addition, since the end portions of the guide pieces 84 fit in the groove-like guide rail portions 72 at the same time, an axial positioning of the head portion 70 is also implemented. By this configuration, when the head portion 70 is pushed in towards the holding portion 83, the head portion 70 is guided in the push-in direction via the guide rail portions 72 and the guide pieces 84.

In addition, the pressing portion 85c of the resilient piece 85 of the holding portion 83 is brought into engagement with the engagement portion 73 of the head portion 70 to press the head portion 70. Consequently, since the reinforcement member 174 which is made bare is formed on the surface of the engagement portion 73 of the head portion 70, the resilient functioning portion 85b is brought into engagement with the engagement portion 73 with the pressing portion 85c received by the reinforcement member 174. As this occurs, by the pressing portion 85c being brought into engagement with the engagement portion 73 (the reinforcement member 174) in a predetermined recessed position, a radial positioning of the head portion 70 relative to the holding portion 83 is implemented. By this configuration, the dislocation of the head portion 70 is suppressed by the head portion 70 being held by the guide pieces 84 and the resilient piece 85 therebetween.

According to the configuration described above, the generation of creep can be eliminated which would otherwise occur due to yielding of the resin used in the head portion of the sensor resulting from deterioration with age after the sensor was installed in the vehicle, and the fixing force with which the sensor is held can be maintained. Therefore, the head portion can be fixed in the holding portion in a stable state. Hence, the reliable rotation detecting unit 6 can be mounted in the hub unit 1.

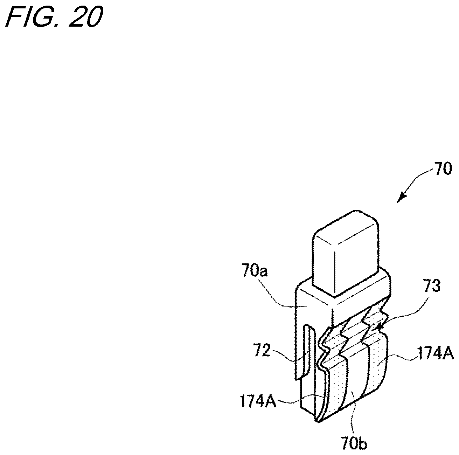

In addition, Fig. 20 shows a modified example to the third embodiment. As is shown in Fig. 20, in a head portion 70, reinforcement members 174A can be formed as bare portions which are provided both side edge portions of a surface of an engagement portion 73 which are parallel to the push-in direction. By this configuration, by forming the reinforcement members 70A locally, the dislocation of the head portion 70 from the holding portion can effectively be suppressed or prevented, and a reduction in costs can be realized.

### (Fourth Embodiment)

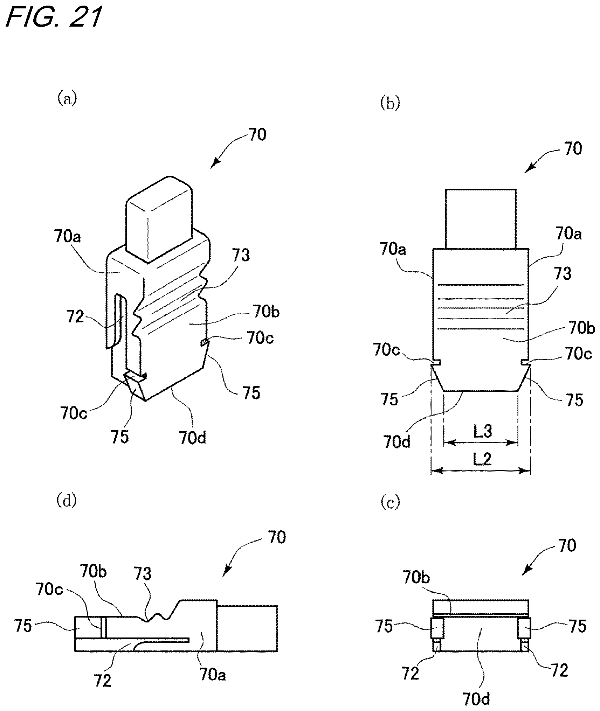

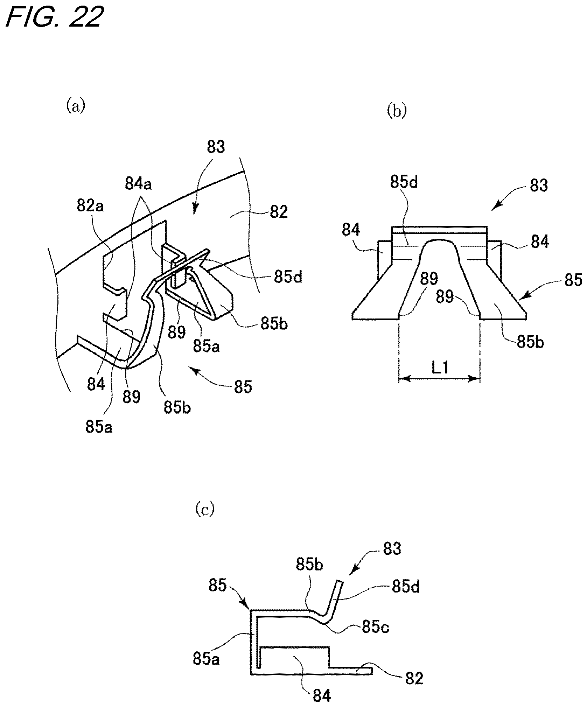

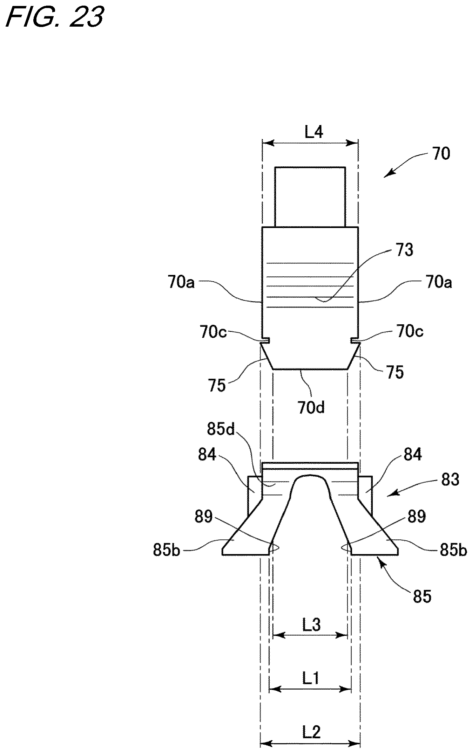

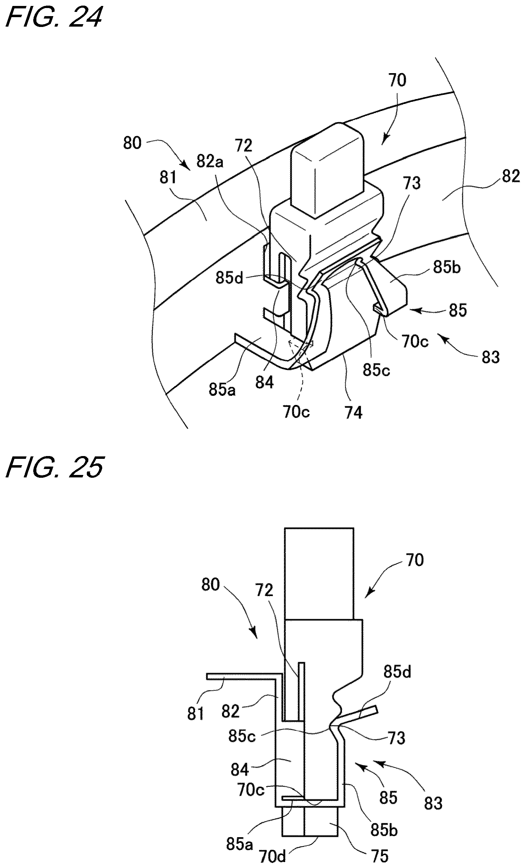

Hereinafter, an embodiment of a rotation detecting sensor mounting construction according to a fourth exemplary embodiment will be described by reference to the drawings. Fig. 21 shows a perspective view, a plan view, a front view and a side view which show an example of a head portion, Fig. 22 shows a perspective view, a plan view and a side view which show an example of a holding portion, Fig. 23 is a diagram showing a relationship between the holding portion and the head portion, Fig. 24 is a perspective view showing an example of a state in which the head portion is mounted in the holding portion, and Fig. 25 shows a plan view and a side view of Fig. 24.

By the use of Figs. 21 and 22, detailed modes of a head portion 70 and a holding portion 83 of the fourth embodiment will be described. As with the previous embodiments, a head portion 70 and a holding portion 83 configure part of a rotation detecting unit 6 for detecting a change in rotation of a drive axle 2 of a hub unit 1. The head portion 70 is such as to detect rotation of a pulser ring 60 in the hub unit 1, and the holding portion 83 is provided on an annular cover element 80 so as to hold the head portion 70 on a vehicle inner side (refer to Figs. 1, 2).

As is shown in Fig. 21, the head portion 70 has on both side portions 70a, 70a thereof slit portions 70c, 70c which are formed into groove-like shapes which extend long while intersecting (for example, at right angles to) a direction in which the head portion 70 is pushed into the holding portion 83 or a push-in direction. In addition, the head portion 70 includes groove-like guide rail portions 72, 72 which extend along the push-in direction on both the side portions 70a, 70a and an engagement portion 73 which takes the form of bellows-like irregularities on an upper portion 70b.

In addition, the head portion 70 has a tapered shape on a further distal side than the slit portions 70c, 70c in which the width of the head portion 70 is gradually reduced from the slit portions 70c towards a distal end portion 174. Namely, chamfered portions 75, 75 are formed individually on both sides of the distal end portion 70d of the head portion 70, and assuming that a width dimension of a portion which corresponds to the slit portions 70c, 70 is referred to as L2 and a width dimension of the distal end portion 70d is referred to as L3, the distal end side of the head portion 70 is formed such that L2 is larger than L3.

Following this, as is shown in Fig. 22, the holding portion 83 of the annular cover element 80 has a pair of guide pieces 84, 84 for guiding the head portion 70 of the sensor which is being pushed in along the push-in direction on the vehicle inner side in an axial direction and a resilient piece 85 which presses the engagement portion 73 of the head portion 70, similarly, from the vehicle inner side for engagement therewith. By this configuration, the holding portion 83 can hold the head portion 70 by the resilient piece 85 from the axial direction.

Specifically, the pair of guide pieces 84, 84 are formed such that they rise so as to hold an opening 82a in an annular wall 82 therebetween from a circumferential direction and that confronting end faces 84a, 84a thereof extend long in a radial direction (refer to Fig. 22(a)).

In addition, the resilient piece 85 has rising base portions 85a which rise from an inner circumferential edge (a radially inside) of the annular wall 82 (the annular cover element 80) towards the vehicle inner side in the axial direction and resilient functioning portions 85b which are bent in a radial direction (radially outwards) from upper ends of the rising base portions 85a. In addition, the resilient functioning portions 85b are formed so as to include pressing portions 85c which press the engagement portion 73 of the head portion for engagement therewith.

Specifically, the resilient piece 85 is formed such that the resilient functioning portion 85b extends radially (radially outwards) from the upper end of the rising base portion 85a, bypasses a direction changing portion 85d which includes the pressing portions 85c which are brought into engagement with the engagement portion 73 of the head portion 70 and extends further to reach the other rising base portion 85a by way of the resilient functioning portion 85b. In addition, the resilient piece 85 (the rising base portions 85a, 85a) fits in the slit portions 70c, 70c formed in both the side portions 70a, 70a to straddle the head portion 70a when the head portion 70 is fixed in the holding portion 83.

Next, as is shown in Fig. 23, a relationship between the head portion 70 and the holding portion 83 is such that assuming that a dimension between confronting inner sides of the two rising base portions 85a, 85a of the resilient piece 85 of the holding portion 83 (a distance over which inner wall surfaces 89, 89 are spaced apart from each other) is referred to as L1 and a maximum width dimension of a portion of the head portion 70 which lies further distal than the slit portions 70c (in this embodiment, a width dimension of a portion of the head portion 70 where the slit portions 70c are formed) is referred to as L2, the head portion 70 and the holding portion 83 are formed such that L1 becomes smaller than L2. In addition, assuming that a maximum width dimension of the portion which lies further distal than the slit portions 70c (in this embodiment, a width dimension of the distal end portion 70d) is referred to as L3, the head portion 70 and the holding portion 83 are formed such that L1 becomes larger than L3. Additionally, assuming that a width dimension of a portion of the head portion 70 which lies further rearwards than the slit portions 70c is referred to as L4, the head portion 70 and the holding portion 80 are formed such that L4 becomes larger than L1. By this configuration, the head portion 70 can easily be assembled into the holding portion 83, and once the former is assembled into the latter, the sensor is made difficult to be dislocated from the holding portion 83 so as to be held in a stable fashion.

Next, by the use of Figs. 24 and 25, a mounting construction of the head portion 70 into the holding portion 83 will be described. As has been described above, by the head portion 70 being pushed in radially (refer to Fig. 2) towards the holding portion 83, the head portion 70 is fixed in a predetermined position in the holding portion 83. Specifically, the head portion 70 is held in the holding portion 83 such that end portions of the guide pieces 84 of the holding portion 83 fit in the guide rail portions 72 of the head portion. As this occurs, the end faces 84a, 84a of the guide pieces 84 are brought into abutment or close contact with the bottoms of the guide rail portions 72, 72, whereby a circumferential positioning of the head portion 70 is implemented. In addition, since the end portions of the guide pieces 84 fit in the groove-like guide rail portions 72 at the same time, an axial positioning of the head portion 70 is also implemented. By this configuration, when the head portion 70 is pushed in relative to the holding portion 83, the head portion 70 is guided in the push-in direction via the guide rail portions 72 and the guide pieces 84.

In addition, the pressing portions 85c of the resilient piece 85 of the holding portion 83 are brought into engagement with the engagement portion 73 of the head portion 70 such that the pressing portions 85c press against the engagement portion 73. As this occurs, by the pressing portions 85c being brought into engagement with a predetermined recessed position on the engagement portion 73, a radial positioning of the head portion 70 relative to the holding portion 83 is implemented. Further, the rising base portions 85a of the resilient piece 85 fit in the slit portions 70c, 70c of the head portion 70 at the same time. By this configuration, since the slit portions 70c, 70c are formed to intersect (for example, at right angles to) the push-in direction, even in the event that the head portion 70 is attempted to be pulled out (pushed in), the slit portions 70c are caught by the rising base portions 85a, whereby the head portion 70 cannot simply be pulled out (pushed in), this preventing the dislocation (pushing in) of the head portion 70. By this configuration, since the head portion 70 is fixedly positioned in the three directions including the axial direction, the radial direction and the circumferential direction by the holding portion 83, the head portion 70 can be held in a stable fashion.

Additionally, as is shown in Fig. 25, the head portion 70 is fixed in such a state that the portion lying further distal than the slit portions 70c projects radially inwards from the holding portion 83 (the rising base portions 85a). As this occurs, the engagement portion 73 can be formed closer to the center of the whole head portion 70, and by the pressing portions 85c pressing the portion in question, the head portion 70 can be held (fixed) in a stable fashion.

According to the construction described above, even in the event that the fixing force for holding the sensor is reduced due to a reduction in spring force as a result of deterioration with age of the resilient piece after installation of the annular cover element on the vehicle and the generation of creep as a result of yielding of the resin, according to the construction described above, the head portion can be fixed in the holding portion in a stable state. Hence, the reliable rotation detecting unit 6 can be mounted on the hub unit 1.

### (Fifth Embodiment)

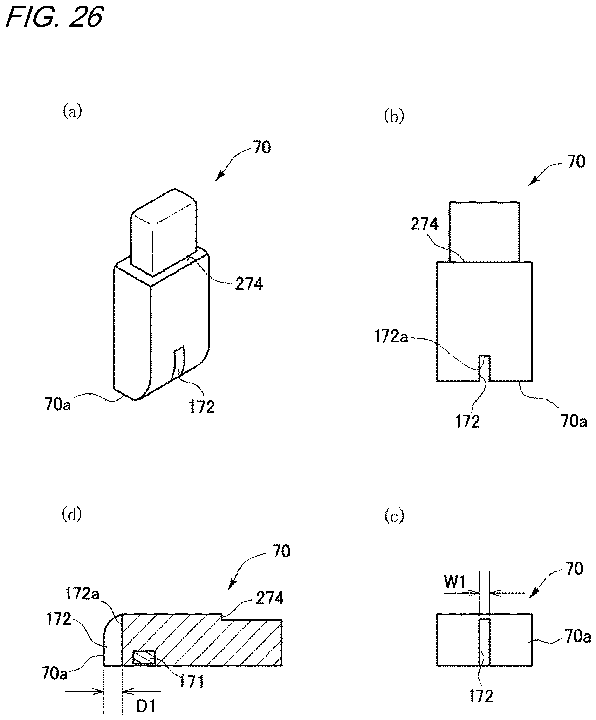

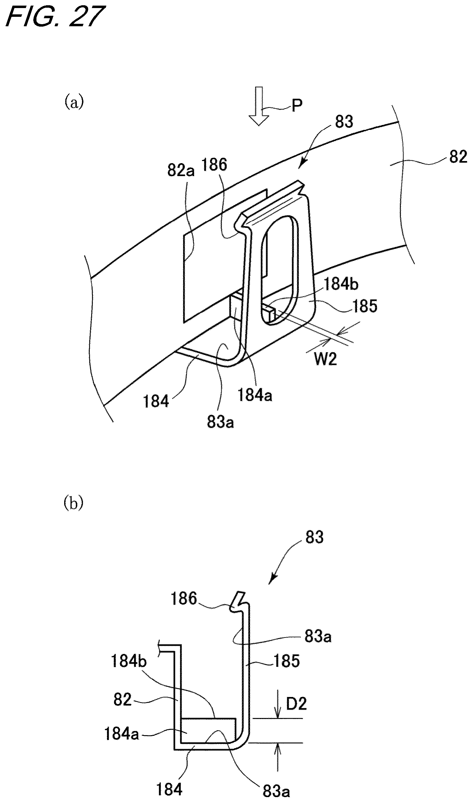

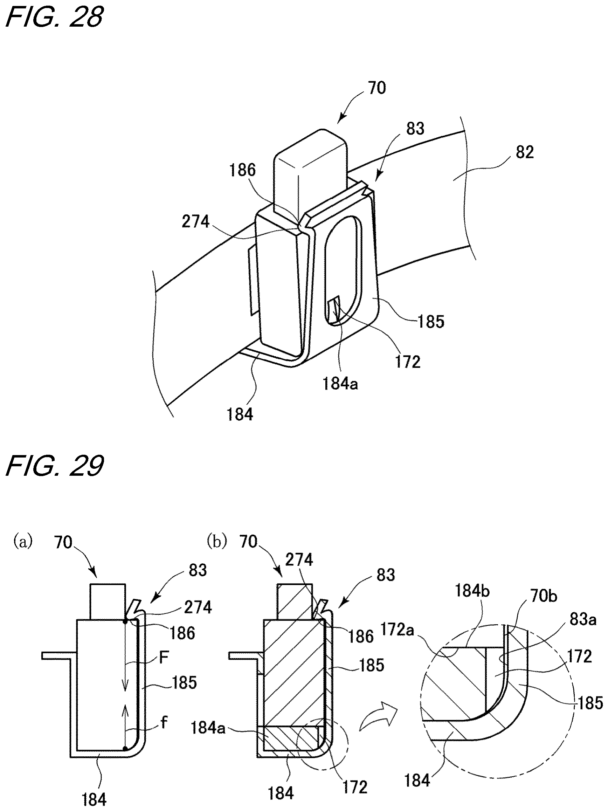

Hereinafter, an embodiment of a rotation detecting sensor mounting construction according to a fifth exemplary embodiment will be described by reference to the drawings. Fig. 26 shows a perspective view, a plan view, a front view and a side view which show an example of a head portion, Fig. 27 shows a perspective view and a side view which show an example of a holding portion, Fig. 28 is a perspective view showing an example of a state in which the head portion is mounted in the holding portion, and Fig. 29 shows a side view, a side sectional view and an main part enlarged view of Fig. 28.

As with the previous embodiments, a head portion 70 and a holding portion 83 configure part of a rotation detecting unit 6 for detecting a change in rotation of a drive axle 2 of a hub unit 1. The head portion 70 is such as to detect rotation of a pulser ring 60 in the hub unit, and the holding portion 83 is provided on an annular cover element 80 so as to hold the head portion 70 on a vehicle inner side (refer to Figs. 1, 2).

The head portion 70 is formed of a polymeric material such as a resin and is molded with a sensor 171 (refer to Fig. 26(d)) such as an IC (Integrated Circuit) chip having a magnetic circuit embedded therein. In addition, the sensor 171 can detect rotation of the pulser ring 60 by detecting the generation of voltage in the magnetic circuit due to a change in magnetic flux density occurring as a result of rotation of the pulser ring 60. In addition, a lead wire 79 is pulled out of the head portion 70.

As is shown in Fig. 26, a groove-like slit portion 172 is formed in the head portion 70 in a lower end portion (a distal end portion 70a in a direction in which the head portion 70 is pushed into the holding portion 83 or a push-in direction, which will be described later) shown in Figs. 26(a), (b) to extend in a thickness direction (a vertical direction as viewed in Figs. 26(c), (d)). In addition, a stepped portion 73 is formed on an upper side of the head portion 70 as viewed in Figs. 26(a), (b) as an engagement portion. Note that the slit portion 172 is formed into a shape in which a depth from a distal end portion 70a to a bottom portion 172 becomes D1 and a width becomes W1.

Next, as is shown in Fig. 27, the holding portion 83 includes a head receiving portion 184 for receiving the head portion 70 of the sensor which is being pushed in along the push-in direction (a direction indicated by an arrow P) and a head pressing portion 186 for pressing the head portion 70 along the push-in direction when the head portion 70 is fixed in the holding portion 83. By this configuration, the holding portion 83 can hold the head portion 70 by the head receiving portion 184 and the head pressing portion 186 in the radial direction therebetween.

Specifically, as is shown in Fig. 28(a), the head receiving portion 184 is formed to rise from an inner circumferential edge of an annular wall 82 (towards, for example, a vehicle inner side in an axial direction), and an extension 185 is formed as a resilient piece which is bent at a vehicle inner side end portion of the head receiving portion 184 for further extension therefrom. The head pressing portion 186 is then formed so as to be positioned at distal end portion of the extension 185 while being caused to swell inwards (towards a vehicle outer side). Namely, the holding portion 83 is formed to extend from a distal end round to a tail side of an upper surface of the head portion 70.

Additionally, a projecting portion 184a is formed on the head receiving portion 184 to extend from the annular wall 82 (the annular cover element 80) towards the extension 185 and to project in a direction (radially outwards) in which the head portion 70 is being pushed in. In this embodiment, this projecting portion 184a has a plate-like shape and is formed to be erected. In addition, this projecting portion 184a fits in the slit portion 172 in the head portion 70 when the head portion 70 is fixed in the holding portion 83. Dimensions of the projecting portion 184a are such that a height which is a projecting amount from the head receiving portion 184 is D2 and a width thereof is W2.

Next, by the use of Figs. 28 and 29, a mounting construction of the head portion 70 into the holding portion 83 and a relationship therebetween will be described. As has been described above, by the head portion 70 being pushed in radially (refer to Fig. 2) towards the holding portion 83, the head portion 70 is fixed in a predetermined position in the holding portion as is shown in Fig. 28. Specifically, as is shown in Fig. 29(a), the stepped portion 274 is pressed relatively in a direction indicated by an arrow F by the head pressing portion 186 of the holding portion 83 and in association with this, the distal end portion 70a of the head portion 70 is pressed relatively against (received by) the head receiving portion 184 of the holding portion 83 in a direction indicated by an arrow f, whereby the head portion 70 is held in the holding portion 83 such that the head portion 70 is held in the radial direction by the head receiving portion 184. In addition, as this occurs, at the distal end portion 70a of the head portion 70, as is shown in Figs. 28 and 29(b), the projecting portion 184a of the holding portion is fitted in the slit portion 172 in the head portion 70 to thereby be held therein. Since the projecting portion 184a and the slit portion 172 are formed to extend along the axial direction, only by causing the slit portion 172 to fit on the projecting portion 184a, a circumferential positioning of the head portion 70 can automatically be realized.

Here, the projecting portion 184a of the holding portion 83 and the slit portion 172 of the head portion 70 are formed such that a top portion 184b of the projecting portion 184a is brought into abutment with a bottom portion 172a of the slit portion 172 when the head portion 70 is fixed in the holding portion 83. Namely, when assuming that the depth of the slit portion 172 is referred to as D1 (refer to Fig. 26(d)) and the height of the projecting portion 184a is referred to as D2 (refer to Fig. 27(b)), the projecting portion 184a and the slit portion 172 are formed so that conditions realizing D1≤D2 are set and satisfied. Consequently, the head portion 70 can be positioned in the radial direction without being brought into contact with an inner surface of the head receiving portion 184. As this occurs, the radial positioning of the head portion 70 does not have to be dependent upon the contact with the inner surface of the head receiving portion 184, and the depth of the slit portion 172 and the height of the projecting portion 184 can be adjusted as required, whereby the head portion 70 can easily be disposed so as to confront the pulser ring. Thus, the rotation detecting sensor mounting construction can be used for general purposes, and hence, a reduction in costs can be realized. Moreover, looseness can effectively be suppressed or prevented.

In addition, when assuming that the thickness of the projecting portion 184a is referred to as W2 (refer to Fig. 27(a)) and the width of the slit portion 172 is referred to as W1 (refer to Fig. 26(c)), the projecting portion 184a of the holding portion 83 (the head receiving portion 184) and the slit portion 172 of the head portion 70 are set and formed so that conditions realizing W2≥W1 are satisfied. Namely, since the head portion 70 is formed of the polymeric material while the annular cover element 80 including the projecting portion 184a of the holding portion 83 is formed of the metal material, the projecting portion 184a can simply be press fitted in the slit portion 172 so that the head portion 70 can be fixed in the holding portion 83 and can be so fixed in a stable fashion.

Additionally, as is shown in Fig. 29(b), the shape of a surface 70b of the head portion 70 which confronts an inner surface 83a of the holding portion 83 which extend from the head receiving portion 184 to reach the head pressing portion 186 by way of the extension 185 when the head portion 70 is fixed in the holding portion is formed so as to match the shape of the inner surface 83a. By this configuration, as is shown in an enlarged view of Fig. 29(b), when the head portion 70 is fixed in the holding portion 83, the head portion 70 is brought into abutment or close contact with the inner surface 83a of the holding portion 83. As this occurs, since the holding portion 83 is formed to extend round the head portion 70 on the vehicle inner side thereof, the holding portion 83 positions the head portion 70 fixed therein particularly in the axial direction and can hold the head portion 70 in a stable fashion.

According to the construction described above, even in the event that the fixing force for holding the sensor is reduced due to a reduction in spring force as a result of deterioration with age of the resilient piece after installation of the annular cover element on the vehicle and the generation of creep as a result of yielding of the resin, according to the construction described above, the head portion can be fixed in the holding portion in a stable state. Hence, the reliable rotation detecting unit 6 can be mounted on the hub unit 1.

In addition, the invention is not limited to the third embodiment. For example, while in the embodiments that have been described heretofore, the rotational speed detecting unit 6 is described as being applied to the hub unit 1 of the drive axle of the motor vehicle, the invention may be applied to a hub unit for a driven axle.

In addition, while in the embodiments that have been described heretofore, the projecting portion 184a is described as being caused to extend in the axial direction, the projecting portion 184a may be formed to extend in a direction which intersects the axial direction (for example, in the circumferential direction) or may be formed to be curved or bent or to intersect itself (for example, a cross form).

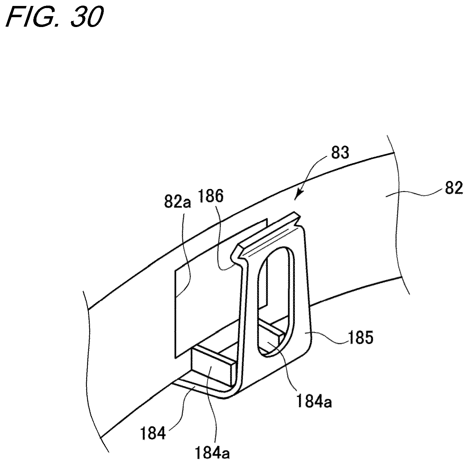

Further, as is shown in Fig. 30, for example, a plurality of (for example, two) projecting portions 184a may be provided for the receiving portion 184 of the holding portion 83. In this case, a plurality of (for example, two) members are formed on the head portion which is fixed in the holding portion 83 to correspond to the projecting portions 184a so formed, whereby, as with the embodiments that have been described above, the head portion 70 can be fixed in the holding portion 83 in the stable fashion.

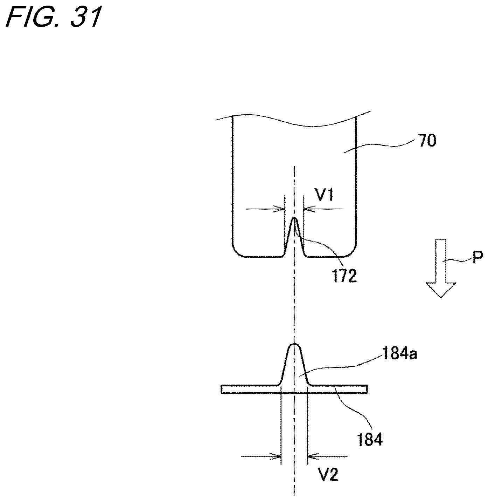

In addition, as is shown in Fig. 31, the projecting portion 184a can be formed to have tapered side surfaces so that a sectional area of the projecting portion 184a decreases as it extends towards a distal end (a top portion) side, while the slit portion 172 can be formed to have tapered inner surfaces which are tapered at the same angle as the tapered angle of the projecting portion 184a so that an opening area of the slit portion 172 decreases as it extends towards a bottom portion side. As this occurs, when assuming that the opening width of the slit portion 172 is referred to as VI and the width of a proximal end portion of the projecting portion 184 is referred to as V2, the projecting portion 184a and the slit portion 172 are formed such that conditions realizing V1≤V2 are satisfied, whereby the projecting portion 184a can simply fit in the slit portion 172 when the head portion 70 is pushed into the holding portion 83, whereby the assemblage of the head portion is facilitated.

## Claims

1. A rotation detecting sensor mounting construction in which a wheel is supported rotatably by an inner ring (4, 51) of a hub unit (1) which is fixed to a vehicle body via an outer ring (52), and a head portion (70) of a sensor for detecting a change in rotation of a pulser ring (60) which is fixed to a vehicle inner side end portion in an axial direction of the inner ring (51) of the hub unit (1) is pushed into a holding portion (83) which is provided on an annular cover element (80) which is fixed to the outer ring (52) of the hub unit (1) to confront the pulser ring (60) from a radial direction so as to be fixed therein, wherein the holding portion (83) of the annular cover element (80) has a guide piece (84) for guiding the head portion (70) of the sensor which is being pushed thereinto along the push-in direction on a vehicle outer side in the radial direction and a resilient piece (85) which is pressed from the vehicle inner side so as to be brought into engagement with an engagement portion (73) which is formed on the head portion (70), whereby the holding portion (83) holds the head portion (70) in the axial direction, and
wherein the head portion (70) includes a head main body which is formed of a polymeric material, **characterized in that**
the head portion (70) is molded with a sensor and a reinforcement member (174) which is made of a metal material and taking a bare form on at least a surface of the engagement portion (73) so as to receive a pressure from the resilient piece (85).

2. A rotation detecting sensor mounting construction as set forth in Claim 1, **characterized in that**
the reinforcement member (174) is formed as being made bare at both end portions of the surface of the engagement portion (73) on the head portion (70) which become parallel to the push-in direction.

3. A rotation detecting sensor mounting construction as set forth in Claim 1 or 2, **characterized in that**
the reinforcement member (174) is configured into a plate-like form which is made to extend from the engagement portion (73) to the distal end portion of the head portion (70) in the push-in direction.

4. A hub unit; comprising:
a hub wheel (4) used as a vehicle outer side inner ring;
a vehicle inner side inner ring (51) which is press fitted on an outer circumferential surface of a shaft portion (41) of the hub wheel;
an outer ring (52) arranged into a plurality of rows;
a rolling bearing (5) formed into a plurality of rows;
two cages (54); and
the rotation detecting sensor mounting construction as set forth in any one of Claims 1 to 3.

## Patentansprüche

1. Rotationserfassungssensor-Montagekonstruktion, bei der ein Rad durch einen Innenring (4, 51) einer Nabeneinheit (1) drehbar gelagert ist, die über einen Außenring (52) an einer Fahrzeugkarosserie befestigt ist,
und ein Kopfabschnitt (70) eines Sensors zum Erfassen einer Rotationsänderung eines Impulsrings (60), der an einem fahrzeuginnenseitigen Endabschnitt in axialer Richtung des Innenringes (51) der Nabeneinheit (1) befestigt ist, in einen Haltebereich (83) eingeschoben ist, der an einem ringförmigen Abdeckelement (80) vorgesehen ist, das am Außenring (52) der Nabeneinheit (1) dem Impulsgeberring (60) aus radialer Richtung gegenüberliegend befestigt ist, sodass es darin befestigt ist,
wobei der Haltebereich (83) des ringförmigen Abdeckelements (80) ein Führungsteil (84) zum Führen des Kopfabschnitts (70) des Sensors, das entlang der Einschubrichtung an einer Fahrzeugaußenseite in radialer Richtung hineingeschoben ist, und ein elastisches Teil (85) aufweist, das von der Fahrzeuginnenseite zum Eingriff mit einem Eingriffsabschnitt (73) angepresst ist, der am Kopfabschnitt (70) ausgebildet ist, wodurch der Halteabschnitt (83) den Kopfabschnitt (70) in axialer Richtung hält, und
wobei der Kopfabschnitt (70) einen Kopfhauptkörper umfasst, der aus einem Polymermaterial gebildet ist, **dadurch gekennzeichnet, dass**
der Kopfabschnitt (70) mit einem Sensor und einem Verstärkungselement (174) geformt ist, das aus einem Metallmaterial hergestellt ist und an zumindest einer Oberfläche des Eingriffsabschnitts (73) eine freiliegende Form zum Aufnehmen eines Drucks vom elastischen Teil (85) aufweist.

2. Rotationserfassungssensor-Montagekonstruktion nach Anspruch 1, **dadurch gekennzeichnet, dass**
das Verstärkungselement (174) an beiden Endabschnitten der Oberfläche des Eingriffsabschnitts (73) am Kopfabschnitt (70) freiliegend ausgebildet ist, die parallel zur Einschubrichtung verlaufen.

3. Rotationserfassungssensor-Montagekonstruktion nach Anspruch 1 oder 2, **dadurch gekennzeichnet, dass**
das Verstärkungselement (174) in plattenartiger Form konfiguriert, die sich vom Eingriffsabschnitt (73) zum distalen Endabschnitt des Kopfabschnitts (70) in Einschubrichtung erstreckt.

4. Nabeneinheit; umfassend:
ein Nabenrad (4), das als fahrzeugaußenseitiger Innenring verwendet wird;
einen fahrzeuginnenseitigen Innenring (51), der auf eine Außenumfangsfläche eines Wellenbereichs (41) des Nabenrads pressgepasst ist;
einen Außenring (52), der in einer Vielzahl von Reihen angeordnet ist;
ein Wälzlager (5), das in einer Vielzahl von Reihen ausgebildet ist;
zwei Käfige (54); und
die Rotationserfassungssensor-Montagekonstruktion nach einem der Ansprüche 1 bis 3.

## Revendications

1. Structure de montage de capteur de détection de rotation dans laquelle une roue est supportée de manière rotative par une bague intérieure (4, 51) d'une unité de moyeu (1) qui est reliée à une carrosserie de véhicule par l'intermédiaire d'une bague extérieure (52), et une partie de tête (70) d'un capteur pour détecter un changement de rotation d'une bague de pulsation (60) qui est fixée à une partie d'extrémité côté intérieur de véhicule dans une direction axiale de la bague intérieure (51) de l'unité de moyeu (1) est poussée dans une partie de maintien (83) qui est prévue sur un élément de couvercle annulaire (80) qui est fixé à la bague extérieure (52) de l'unité de moyeu (1) pour faire face à la bague de pulsation (60) dans une direction radiale de manière à être fixée dans celle-ci,
dans laquelle la partie de maintien (83) de l'élément de couvercle annulaire (80) a une pièce de guidage (84) servant à guider la partie de tête (70) du capteur qui est poussée dans celle-ci le long de la direction de poussée sur un côté extérieur de véhicule dans la direction radiale et une pièce résiliente (85) qui est pressée du côté intérieur de véhicule de manière à être amenée à s'engager avec une partie d'engagement (73) qui est formée sur la partie de tête (70), moyennant quoi la partie de maintien (83) maintient la partie de tête (70) dans la direction axiale, et
dans laquelle la partie de tête (70) comporte un corps principal de tête qui est formé d'un matériau polymère, **caractérisée en ce que**
la partie de tête (70) est moulée avec un capteur et un élément de renforcement (174) qui est constitué d'un matériau métallique et prenant une forme nue sur au moins une surface de la partie d'engagement (73) de manière à recevoir une pression de la pièce résiliente (85).

2. Structure de montage de capteur de détection de rotation selon la revendication 1, **caractérisée en ce que**
l'élément de renforcement (174) est formé de manière à être dénudé au niveau des deux parties d'extrémité de la surface de la partie d'engagement (73) sur la partie de tête (70) qui deviennent parallèles à la direction de poussée.

3. Structure de montage de capteur de détection de rotation selon la revendication 1 ou 2, **caractérisée en ce que**
l'élément de renforcement (174) est configuré selon une forme de plaque qui est amenée à s'étendre de la partie d'engagement (73) à la partie d'extrémité distale de la partie de tête (70) dans la direction de poussée.

4. Unité de moyeu, comprenant :
une roue de moyeu (4) utilisée en tant que bague intérieure coté extérieur de véhicule ;
une bague intérieure côté intérieur de véhicule (51) qui est ajustée avec serrage sur une surface circonférentielle extérieure d'une partie d'arbre (41) de la roue de moyeu ;
une bague extérieure (52) agencée en une pluralité de rangées ;
un roulement (5) formé en une pluralité de rangées ;
deux cages (54) ; et
la structure de montage de capteur de détection de rotation selon l'une quelconque des revendications 1 à 3.
